# FASCICULE DE BREVET EUROPEEN

(11) **EP 3 262 006 B1**
(45) Date de publication et mention de la délivrance du brevet: **07.07.2021**
(21) Numéro de dépôt: 16713527.6
(22) Date de dépôt: 23.02.2016
(51) Int. Cl.: C03C 17/36

(54) **VITRAGE COMPRENANT UN REVETEMENT PROTECTEUR**
VERGLASUNG MIT EINER SCHUTZBESCHICHTUNG
GLAZING COMPRISING A PROTECTIVE COATING

(30) Priorité: 24.02.2015 FR 1551552
(43) Date de publication de la demande: 03.01.2018
(73) Titulaire: SAINT-GOBAIN GLASS FRANCE, 92400 Courbevoie (FR)
(72) Inventeur: LORENZZI, Jean-Carlos, 75011 Paris (FR); GEORGES, Benoît, 85254 SCOTTSDALE (US); LAURENT, Stéphane, Orleans 45000 (FR)
(74) Mandataire: Saint-Gobain Recherche
(86) Numéro de dépôt international: PCT/FR2016/050419
(87) Numéro de publication internationale: WO 2016/135417

(56) Documents cités:
- EP-A1- 1 338 576
- EP-A2- 2 289 856
- EP-B1- 1 451 118
- EP-B1- 2 598 454
- WO-A2-2006/069068

## Description

L'invention concerne un matériau et un procédé de préparation d'un matériau, tel qu'un vitrage, comprenant un substrat transparent revêtu d'un empilement de couches minces agissant sur le rayonnement infrarouge comprenant au moins une couche fonctionnelle à base d'argent.

Les couches fonctionnelles à base d'argent (ou couches d'argent) sont utiles à plusieurs titres : en réfléchissant le rayonnement infrarouge, thermique ou solaire, elles impartissent au matériau des fonctions de basse émissivité ou de contrôle solaire. Conductrices de l'électricité, elles permettent également d'obtenir des matériaux conducteurs, par exemple des vitrages chauffants ou des électrodes.

Les couches fonctionnelles à base d'argent sont déposées entre des revêtements à base de matériaux diélectriques qui comprennent généralement plusieurs couches diélectriques permettant d'ajuster les propriétés optiques de l'empilement.

Fréquemment, de tels matériaux doivent subir des traitements thermiques, destinés à améliorer les propriétés du substrat et/ou de l'empilement de couches minces. Il peut par exemple s'agir, dans le cas de substrats en verre, de traitement de trempe thermique destinés à renforcer mécaniquement le substrat en créant de fortes contraintes de compression à sa surface. De tels traitements peuvent également améliorer certaines propriétés de l'empilement, notamment en améliorant les caractéristiques de cristallisation de couches minces. Par exemple, un empilement comprenant une couche d'argent, qui possède des propriétés de faible émissivité et de conduction électrique, voit ces propriétés améliorées lorsque sa structure cristalline est de meilleure qualité : grains de plus grande taille, diminution des joints de grains etc.

Il est connu de soumettre des substrats munis de tels empilements à des traitements de trempe thermique ou de recuit, dans des fours de trempe ou de recuisson, ou encore à des traitements de recuit rapide, par exemple à l'aide d'une flamme, d'une torche plasma ou d'un rayonnement laser, tel que décrit dans la demande WO 2008/096089.

La résistance mécanique et chimique de ces matériaux comprenant des empilements complexes soumis à des traitements thermiques à température élevée est souvent insuffisante et cela, a fortiori, lorsque les couches fonctionnelles sont des couches métalliques à base d'argent. Cette faible résistance se traduit par l'apparition à court terme de défauts tels que des points de corrosion, des rayures, voire de l'arrachement total ou partiel de l'empilement lors de son utilisation dans des conditions normales. Tous défauts ou rayures, qu'ils soient dus à la corrosion, à des sollicitations mécaniques ou à une faible adhésion entre couches adjacentes, sont susceptibles d'altérer non seulement l'esthétique du substrat revêtu mais également ses performances optiques et énergétiques.

Des couches supérieures de protection sont classiquement utilisées à diverses fins, notamment pour améliorer la résistance aux rayures, la résistance à la corrosion et/ou la résistance aux traitements thermiques à température élevée.

On connait par exemple des couches supérieures de protection à base d'oxyde de titane et d'oxyde mixte de zinc et d'étain.

Il est également connu d'utiliser des couches de carbone sous forme graphite ou amorphe pour améliorer la résistance aux rayures.

La demande EP 2,289,856 concerne des articles transparents comprenant un substrat revêtu d'un revêtement optique comprenant plusieurs couches dont la couche la plus éloignée du substrat est une couche de nitrure de silicium et d'un revêtement protecteur constitué d'une couche « SPB » bloquant la propagation de rayures à base de matériaux choisis parmi Ti, Si, Zn, Sn, In, Zr, Al, Cr, Nb, Mo, Hf, Ta et W et d'une couche essentiellement constituée de carbone.

Les couches de carbone amorphe dites DLC (« Diamond-Like-Carbon ») comprennent des atomes de carbone dans un mélange d'état d'hybridation sp2 et sp3. De telles couches ne sont pas déposables par un procédé magnétron classique. Elles sont en général obtenues par dépôt chimique en phase vapeur assisté par un plasma (PECVD), par ablation laser, par pulvérisation par arc ou par dépôt par faisceau d'ion.

Les couches de carbone dites « graphite » comprennent des atomes de carbone essentiellement dans un état d'hybridation sp2. Ces couches sont parfois utilisées comme couche de protection temporaire. Elles peuvent alors être éliminées lors d'un traitement thermique, par oxydation en dioxyde de carbone.

Cependant, les substrats revêtus de telles couches ne présentent pas une résistance suffisante aux rayures. De plus, lors des étapes de transformation et de manipulation du matériau, mais surtout lorsque le matériau est destiné à subir un traitement thermique à température élevée, les couches de protection supérieures peuvent être en parties dégradée si elles ne sont pas protégées de manière adéquate. Cela a pour conséquence de rendre la couche supérieure de protection moins efficace, voir inefficace, après traitement thermique.

Les propriétés des empilements à base d'argent, tels que la neutralité en couleur ou les performances énergétiques résultent d'un contrôle précis des effets d'interférences optiques. Dans la plupart des cas, un compromis entre l'obtention d'une bonne résistance avant et après traitement thermique et le contrôle des effets d'interférences est difficile à trouver. Cela limite considérablement le choix de la couche supérieure de protection (nature et épaisseur).

En effet, la réalisation d'un traitement thermique impose de choisir une couche de protection supérieure résistant au traitement thermique au détriment du choix d'une couche de protection susceptible de conférer à l'empilement les meilleures propriétés par exemple en termes de résistance aux rayures ou de performances énergétiques.

Cela est d'autant plus vrai pour des empilements qui comprennent plusieurs couches fonctionnelles à base d'argent.

Il existe un besoin de protéger plus efficacement les substrats revêtus d'empilements agissant sur le rayonnement infrarouge comprenant des couches fonctionnelles à base d'argent pendant les étapes de fabrication, de transformation, de transport et/ou de stockage.

Il existe également un besoin d'améliorer la résistance mécanique telle que la résistance à la corrosion et à la rayure des substrats revêtus d'empilement comprenant une couche fonctionnelle à base d'argent devant subir un traitement thermique. Cette amélioration doit être obtenue avant et après traitement thermique.

Le demandeur a découvert de manière surprenante que l'utilisation d'un revêtement protecteur comprenant au moins trois couches, une couche de protection inférieure, une couche de protection centrale à base de carbone graphite et une couche de protection supérieure, permet d'améliorer considérablement la résistance aux rayures.

L'invention concerne un matériau selon la revendication 1.

L'invention concerne également un procédé de préparation d'un matériau selon la revendication 13.

Selon le procédé de l'invention, on fait subir un traitement thermique au substrat ainsi revêtu de manière à retirer de la surface dudit substrat la couche de protection centrale et la couche de protection supérieure. La couche centrale est éliminée par oxydation en dioxyde de carbone. La couche de protection supérieure est quant à elle élimée par désolidarisation du reste de l'empilement. Le matériau comprenant le revêtement protecteur à base de trois couches est obtenu en tant que produit intermédiaire durant la mise en œuvre du procédé selon l'invention.

Les caractéristiques préférées qui figurent dans la suite de la description sont applicables aussi bien au procédé selon l'invention que, le cas échéant, au produit intermédiaire selon l'invention.

La solution de l'invention comprenant un revêtement protecteur formé de trois couches permet d'augmenter de manière considérable le choix des couches de protection. Elle permet notamment des choisir à la fois une couche de protection supérieure présentant la meilleure résistance aux rayures avant trempe et une couche de protection inférieure présentant la meilleure résistance aux rayures après trempe. Ce choix peut être fait sans être limité par les propriétés optiques, colorimétriques et performances énergétiques finales dans la mesure où certaines de ces couches sont supprimées suite au traitement thermique.

La solution de l'invention permet également de conserver la couche de protection inférieure intacte avant traitement thermique. La solution de l'invention permet donc d'assurer au mieux la protection avant et après traitement thermique.

La couche de protection inférieure peut être qualifiée de « permanente » alors que la couche de protection centrale et la couche de protection supérieure peuvent être qualifiées de « temporaire ».

Selon l'invention, on entend par couche permanente, une couche qui n'est pas éliminée lors des étapes de transformation, transport et traitement thermique.

Selon l'invention, on entend par couche temporaire, une couche qui est éliminée lors des étapes de transformation, transport et traitement thermique

La présence, directement au-dessus de la couche inférieure de protection, d'une couche centrale temporaire à base de carbone, permet, à l'issue du traitement thermique d'éliminer la couche centrale et la couche de protection supérieure.

La présence d'une couche de protection supérieure située au-dessus de la couche de carbone présentant une épaisseur de 1 à 10 nm, permet d'améliorer encore davantage la résistance aux rayures avant traitement thermique en utilisant une couche supérieure plus performante que la couche de carbone. En effet, cette couche supérieure peut avantageusement être choisie en fonction des sollicitations auxquelles doit être soumis l'empilement avant traitement thermique.

L'étape d'élimination est avantageusement mise en œuvre après des étapes de transport, de découpe et de manutention du substrat, la partie temporaire du revêtement protecteur pouvant alors protéger la surface du substrat contre les rayures.

Dans le matériau final, après élimination des couches temporaires du revêtement protecteur, l'intégralité de la surface de la couche de protection inférieure est de préférence en contact avec l'extérieur.

La couche de protection inférieure et la couche de protection supérieure sont choisies parmi une couche de titane, de zirconium, d'hafnium, de zinc et/ou d'étain, ce ou ces métaux étant sous forme métallique, oxydée ou nitrurée.

La couche de protection inférieure et/ou la couche de protection supérieure peuvent dont être choisi parmi une couche :
- métallique de titane ; de zirconium ; d'hafnium ; de titane et de zirconium ; de titane, de zirconium et d'hafnium ; de zinc et d'étain ;
- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium ; d'oxyde de zinc et d'étain.

Selon un mode de réalisation, la couche de protection inférieure et/ou la couche de protection supérieure est à base de titane et de zirconium et comprend ces deux métaux étant sous forme métallique, oxydée ou nitrurée (ci-après à base de titane et de zirconium).

Selon un mode de réalisation, la couche de protection inférieure et/ou la couche de protection supérieure est à base d'oxyde de titane.

Les couches à base de titane et de zirconium présentent par ordre de préférence croissant un rapport en poids de titane sur zirconium Ti/Zr compris entre 40/60 et 90/10, entre 50/50 et 80/20, entre 60/40 et 70/30, entre 60/40 et 65/35.

Les couches à base de titane et de zirconium présentent par ordre de préférence croissant un rapport atomique de titane sur zirconium Ti/Zr compris entre 70/30 et 95/5, entre 70/30 et 85/15, entre 70/30 et 80/20.

Les couches à base d'oxyde de titane et de zirconium peuvent être déposées à partir d'une cible métallique de TiZr ou céramique de TiZrOx. Le rapport de titane sur zirconium Ti/Zr dans la couche est quasiment équivalent à celui de la cible. Les cibles céramiques ou métalliques peuvent éventuellement comprendre d'autres éléments que l'on retrouve dans les couches déposées à partir de ces cibles.

La couche de protection inférieure et/ou la couche de protection supérieure ont une épaisseur :
- inférieure ou égale à 10 nm, inférieure ou égale à 7 nm ou inférieure ou égale à 5 nm, et/ou
- supérieure ou égale à 1 nm, supérieure ou égale à 2 nm ou supérieure ou égale à 3 nm.

Selon l'invention, une couche à base de carbone comprend au moins 95,0 %, de préférence au moins 96,5 % et mieux au moins 98,0 % en masse de carbone par rapport à la masse de la couche à base de carbone. De préférence, la couche à base de carbone comprend moins de 1,0 % en masse d'éléments autres que du carbone par rapport à la masse de la couche à base de carbone.

La couche de protection centrale à base de carbone graphite comprend des atomes de carbone essentiellement dans un état d'hybridation sp2. Cela signifie que les atomes de carbone formant des liaisons carbone-carbone sont essentiellement dans un état d'hybridation sp2. On considère que les atomes de carbone de la couche sont essentiellement dans un état d'hybridation sp2 quand au moins 80 %, au moins 90 %, voire au moins 100 % des atomes de carbone sont dans un état d'hybridation sp2. L'hybridation des atomes de carbone peut-être caractérisée par spectroscopie infrarouge à transformée de Fourier (FTIR).

La couche à base de carbone selon l'invention diffère de par cette caractéristique des couches dites DLC qui sont des couches de carbone amorphe éventuellement hydrogéné comprenant des atomes de carbone dans un mélange d'état d'hybridation sp2 et sp3, de préférence essentiellement sp3. Les atomes de carbone ne sont pas essentiellement dans un état d'hybridation sp2.

La couche de protection centrale à base de carbone selon l'invention peut être obtenue par pulvérisation cathodique assistée par champ magnétique, par exemple à l'aide d'une cible de graphite. L'atmosphère dans l'enceinte de dépôt comprend un gaz neutre, de préférence de l'argon.

Selon un mode de réalisation, la couche de protection centrale a une épaisseur :
- inférieure ou égale à 5 nm, inférieure ou égale à 2 nm, inférieure à 1 nm et/ou
- supérieure ou égale à 0,1 nm, supérieure ou égale à 0,2 nm, supérieure ou égale à 0,5 nm.

Selon un mode de réalisation avantageux, la couche de protection centrale a une épaisseur strictement inférieure à 1 nm, de préférence comprise entre 0,2 et 0,8 nm.

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction. Par Abs., on entend au sens de la présente description l'absorption à incidence normale, sous l'illuminant D65 avec un champ de vision de 2°.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

Les couches d'argent sont déposées entre des revêtements à base de matériaux diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques.

Les empilements peuvent comprendre en outre des couches de blocage dont la fonction est de protéger les couches fonctionnelles en évitant une éventuelle dégradation liée au dépôt d'un revêtement à base de matériaux diélectriques ou liée à un traitement thermique. Selon un mode de réalisation, l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées notamment lorsque la couche fonctionnelle est une couche métallique à base d'argent, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,5 nm ou d'au moins 0,8 nm et/ou
- d'au plus 5,0 nm ou d'au plus 2,0 nm.

Selon un mode de réalisation, l'empilement de couches minces comprend au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

Selon un autre mode de réalisation, l'empilement de couches minces comprend au moins deux couches métalliques fonctionnelles à base d'argent, au moins trois revêtements à base de matériaux diélectriques, chaque revêtement comportant au moins une couche diélectrique, de manière à ce que chaque couche métallique fonctionnelle soit disposée entre deux revêtements à base de matériaux diélectriques.

Selon un autre mode de réalisation, l'empilement de couches minces comprend au moins trois couches métalliques fonctionnelles à base d'argent, au moins quatre revêtements à base de matériaux diélectriques, chaque revêtement comportant au moins une couche diélectrique, de manière à ce que chaque couche métallique fonctionnelle soit disposée entre deux revêtements à base de matériaux diélectriques.

Les revêtements à base de matériaux diélectriques présentent une épaisseur supérieure à 15 nm, de préférence comprise entre 15 et 50 nm et mieux de 30 à 40 nm.

Les couches diélectriques des revêtements à base de matériaux diélectriques présentent les caractéristiques suivantes seules ou en combinaison :
- elles sont déposées par pulvérisation cathodique assistée par champ magnétique,
- elles sont choisies parmi les couches diélectriques à fonction barrière ou à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 35 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, l'empilement comprend une couche diélectrique à base de nitrure de silicium et/ou d'aluminium située au-dessus d'au moins une partie de la couche fonctionnelle et en-dessous de la couche inférieure de protection à base de titane et de zirconium. La couche diélectrique à base de nitrure de silicium et/ou d'aluminium a une épaisseur :
- inférieure ou égale à 100 nm, inférieure ou égale à 50 nm ou inférieure ou égale à 40 nm, et/ou
- supérieure ou égale à 15 nm, supérieure ou égale à 20 nm ou supérieure ou égale à 25 nm.

La couche diélectrique à base de nitrure de silicium et/ou d'aluminium est de préférence au-contact de la couche de protection inférieure à base de titane et de zirconium.

La couche de protection inférieure à base de titane et de zirconium est de préférence au-contact de la couche de protection centrale.

La couche de protection centrale est de préférence au-contact de la couche de protection supérieure.

La couche de protection supérieure est de préférence la dernière couche de l'empilement, c'est-à-dire la couche la plus éloignée du substrat revêtu de l'empilement (avant traitement thermique).

La couche de protection inférieure est de préférence la dernière couche de l'empilement, c'est-à-dire la couche la plus éloignée du substrat revêtu de l'empilement (après traitement thermique).

Un exemple d'empilement convenant selon l'invention comprend :
- un revêtement à base de matériaux diélectriques situé en-dessous de la couche métallique fonctionnelle à base d'argent, le revêtement pouvant comprendre au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement pouvant comprendre au moins une couche diélectrique à base de nitrure de silicium et/ou d'aluminium,
- un revêtement protecteur.

Les substrats transparents selon l'invention sont en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat transparent revêtu de l'empilement, est destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le matériau peut être sous forme de vitrage monolithique, de vitrage feuilleté ou d'un vitrage multiple notamment un double-vitrage ou un triple vitrage.

L'invention concerne également un procédé de préparation du matériau. Le procédé comprendre en outre l'étape pendant laquelle on fait subir un traitement thermique au substrat ainsi revêtu de manière à retirer de la surface dudit substrat la couche de protection centrale et la couche de protection supérieure. Ce traitement thermique peut être réalisé à une température supérieure à 300 °C ou supérieure à 400 °C, de préférence supérieure 500 °C.

Cette étape d'élimination, est de préférence mise en œuvre juste avant l'étape d'intégration du matériau dans un vitrage.

Le traitement thermique est de préférence choisi parmi les traitements de trempe, de recuit, de recuit rapide.

Le traitement de trempe ou de recuit est généralement mis en œuvre dans un four, respectivement de trempe ou de recuisson. L'intégralité du matériau, y compris donc le substrat, peut être portée à une température élevée, d'au moins 300°C dans le cas de la recuisson, et d'au moins 500°C, voire 600°C, dans le cas d'une trempe.

Le recuit rapide est de préférence mis en œuvre à l'aide d'une flamme, d'une torche plasma ou d'un rayonnement laser. Dans ce type de procédé, on vient créer un mouvement relatif entre le substrat et le dispositif (flamme, laser, torche plasma) afin de traiter le matériau. Généralement, le dispositif est mobile, et le matériau vient défiler au regard du dispositif de manière à traiter sa surface. Ces procédés permettent d'apporter une grande densité d'énergie en un temps très faible, limitant ainsi la diffusion de la chaleur vers le substrat, et donc le chauffage dudit substrat. La température du substrat est généralement d'au plus 100°C, voire 50° et même 30°C pendant le traitement. Chaque point de la couche mince est soumis au traitement de recuit rapide pendant une durée généralement inférieure ou égale à 1 seconde, voire 0,5 seconde. Le traitement thermique de recuit rapide est de préférence mis en œuvre à l'aide d'un rayonnement laser, notamment infrarouge. Un tel procédé est par exemple décrit dans la demande WO 2012/022874. Le dispositif de rayonnement laser peut être intégré dans une ligne de dépôt de couches, par exemple une ligne de dépôt par pulvérisation cathodique assistée par champ magnétique (procédé magnétron).

Les exemples qui suivent illustrent l'invention sans toutefois la limiter.

### Exemples

Des empilements de couches minces définis ci-après sont déposés sur des substrats en verre clair sodo-calcique d'une épaisseur de 4 mm.

Les empilements sont déposés, de manière connue, sur une ligne de pulvérisation cathodique (procédé magnétron) dans laquelle le substrat vient défiler sous différentes cibles.

Pour ces exemples, les conditions de dépôt des couches déposées par pulvérisation (pulvérisation dite « cathodique magnétron ») sont résumées dans le tableau ci-dessous.

| **Tableau 1** | **Cibles employées** | **Pression dépôt** | **Gaz** | **Indice*** |
|---|---|---|---|---|
| Si₃N₄ | Si:Al (92:8 % en pds) | 2-15*10⁻³ mbar | Ar:30-60 % - N₂:40-70 % | 2,00 |
| NiCr | Ni:Cr (80:20 % at.) | 1-5*10⁻³ mbar | Ar à 100 % | - |
| Ag | Ag | 2-3*10⁻³ mbar | Ar à 100 % | - |
| TiO₂ | TiOx | 1,5*10⁻³ mbar | Ar 88 % - O₂ 12 % | 2,32 |
| TiZr | TiZr | 2-4*10⁻³ mbar | Ar 100 % | - |
| C | Graphite | 1,5*10⁻³ mbar | Ar 100 % | 2.25 |

| | | | | |
|---|---|---|---|---|
| at. : atomique ; pds : poids ; * : à 550 nm. | | | | |

Les couches de titane et de zirconium sont déposées à partir d'une cible métallique de TiZr. Le rapport titane sur zirconium Ti/Zr dans la cible est d'environ 57:43 en poids. Le rapport de titane sur zirconium Ti/Zr dans la couche est quasiment équivalent à celui de la cible.

Les substrats sont tous revêtus d'un empilement de couches minces comprenant trois couches fonctionnelles à base d'argent variant uniquement par la nature du revêtement protecteur. Cet empilement comprend la séquence suivante de couche en partant du substrat de verre :
- Revêtement à base de matériaux diélectriques : Si₃N₄/ZnO,
- Ag / NiCr,
- Revêtement à base de matériaux diélectriques : ZnO/Si₃N₄/ZnO,
- Ag / NiCr,
- Revêtement à base de matériaux diélectriques : ZnO/Si₃N₄/ZnO,
- Ag / NiCr,
- Revêtement à base de matériaux diélectriques : ZnO/Si₃N₄,
- Revêtement protecteur.

Les substrats revêtus sont traités thermiquement. La partie temporaire du revêtement protecteur est totalement éliminée.

| Traitement Thermique | Revêtement protecteur : Couche de protection | Inv. 1 | Inv. 2 | Inv. 3 | Cp.1 | Cp.2 |
|---|---|---|---|---|---|---|
| Avant | - Supérieure (1 à 5 nm) | TiOx | TiOx | TiOx | - | - |
| | - Centrale (1 à 3 nm) | C | C | C | C | - |
| | - Inférieure (1 à 5 nm) | TiZr | SnZnO | TiOx | TiZr | TiZr |
| Après | - Inférieure (1 à 5 nm) | TiZrO | SnZnO | TiOx | TiZrO | TiZrO |

Après traitement thermique, les couches de protection inférieure à base de titane et de zirconium sont oxydées. Afin d'évaluer la résistance mécanique de l'empilement, différents tests ont été réalisés :
- Test à la laine d'acier (« steel wool »),
- Test « harp test ».

Le test à la laine d'acier (« steel wool ») et le « harp test » sont deux tests qui consistent à effectuer volontairement des rayures à la surface du matériau sur le côté de l'empilement.

Le test à la laine d'acier consiste à effectuer un certain nombre d'aller-retours en frottant, avec un morceau de laine d'acier, le matériau revêtu du côté de l'empilement, avec une pression constante.

Le « harp test » a pour objectif de simuler les conditions de frottement auxquelles un substrat revêtu d'un empilement peut être soumis dans un charriot à harpe. Ce test consiste à frotter le matériau revêtu du côté de l'empilement avec une corde provenant d'un charriot à harpe.

Ces deux tests ont été faits sur des substrats nettoyés. Les substrats nettoyés subissent, après réalisation des rayures, une étape de nettoyage consistant en plusieurs passages en machine à laver.

Les substrats sont ensuite trempés par exemple pendant 5 minutes à 650 °C. Puis, on apprécie visuellement l'état du matériau.

On attribue une notation en fonction de la graduation suivante :
- 1 : verre pas ou très peu rayé (0 à 5 rayures),
- 2 : verre peu rayé (jusqu'à 20 rayures),
- 3 : verre assez rayé (jusqu'à 50 rayures),
- 4 : verre très rayé (nombre de rayures supérieur à 50).

| **Exemple** | **Test** | **Notation** | **Commentaire** |
|---|---|---|---|
| **Inv.1** | Steel Wool | 1 | Rien à l'œil nu |
| | Harp | 1 | |
| **Cp.1** | Steel Wool | 2 | Quelques points de corrosion le long des endroits frottés par les cordes |
| | Harp | 2 | |
| **Cp.2** | Steel Wool | 2 | Quelques points de corrosion le long des endroits frottés par les cordes |
| | Harp | 2 | |

Le matériau selon l'invention satisfait à chacun de ces tests et donne du point de vue de la résistance à la rayure d'excellents résultats. De plus, l'étape de lavage ne modifie pas les bonnes propriétés de résistance à la rayure obtenues.

Afin d'évaluer la résistance mécanique de l'empilement les différents tests suivants ont été réalisés sur le matériau selon l'invention :
- Test de rayure Erichsen (EST),
- Test Erichsen à la Brosse (EBT) avant et après trempe à 1000 cycles,
- Test de nettoyage.

Le test Erichsen à la Brosse (EBT) consiste à soumettre différents substrats revêtus avant (EBT) et après trempe (TT-EBT) à un certain nombre de cycles (1000) pendant lesquelles l'empilement recouvert d'eau est frotté à l'aide d'une brosse. On considère qu'un substrat satisfait au test si aucune marque n'est visible à l'œil nu. Le test avant trempe donne une bonne indication sur l'aptitude du vitrage à être rayé lors d'une opération de lavage. Le test après trempe donne une bonne indication sur la propagation des rayures après traitement thermique.

Le test de rayure Erichsen (EST) consiste à appliquer une force sur l'échantillon, en Newton, à l'aide d'une pointe (pointe de Van Laar, bille d'acier). En fonction de la résistance à la rayure de l'empilement, différents types de rayures peuvent être obtenus : continues, discontinues, larges, étroites, etc.

Le test de nettoyage consiste à trois passages en machine à laver du substrat.

Le matériau selon l'invention satisfait à chacun de ces tests et donne du point de vue de la résistance à la rayure d'excellents résultats.

## Revendications

1. Matériau comprenant un substrat transparent en verre ou en polymère revêtu d'un empilement de couches minces comprenant au moins une couche fonctionnelle à base d'argent, **caractérisé en ce que** l'empilement comprend un revêtement protecteur déposé au-dessus d'au moins une partie de la couche fonctionnelle, le revêtement protecteur comprenant :
- une couche de protection inférieure présentant une épaisseur comprise entre 1 et 10 nm,
- une couche de protection centrale à base de carbone graphite située au-dessus de la couche de protection inférieure, et
- une couche de protection supérieure présentant une épaisseur comprise entre 1 et 10 nm située au-dessus de la couche de protection centrale,
la couche de protection inférieure et la couche de protection supérieure sont choisies parmi une couche de titane, de zirconium, d'hafnium, de zinc et/ou d'étain, ce ou ces métaux étant sous forme métallique, oxydée ou nitrurée.

2. Matériau selon la revendication 1 **caractérisé en ce que** la couche de protection inférieure et/ou la couche de protection supérieure ont une épaisseur :
- inférieure ou égale à 5 nm, et/ou
- supérieure ou égale à 2 nm.

3. Matériau selon l'une quelconque des revendications précédentes **caractérisé en ce que** la couche de protection inférieure est à base de titane et de zirconium, ces deux métaux étant sous forme métallique, oxydée ou nitrurée.

4. Matériau selon la revendication 3 **caractérisé en ce que** la couche de protection inférieure à base de titane et de zirconium présente un rapport en poids de titane sur zirconium Ti/Zr compris entre 40/60 et 90/10.

5. Matériau selon l'une quelconque des revendications précédentes **caractérisé en ce que** la couche de protection supérieur est à base d'oxyde de titane.

6. Matériau selon l'une quelconque des revendications précédentes **caractérisé en ce que** la couche de protection centrale à base de carbone graphite comprend des atomes de carbone essentiellement dans un état d'hybridation sp2.

7. Matériau selon l'une quelconque des revendications précédentes **caractérisé en ce que** la couche de protection centrale a une épaisseur :
- inférieure ou égale à 5 nm, et/ou
- supérieure ou égale à 0,5 nm.

8. Matériau selon l'une quelconque des revendications précédentes **caractérisé en ce que** l'empilement de couches minces comprend au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

9. Matériau selon l'une quelconque des revendications précédentes **caractérisé en ce que** l'empilement de couches minces comprend au moins deux couches métalliques fonctionnelles à base d'argent, au moins trois revêtements à base de matériaux diélectriques, chaque revêtement comportant au moins une couche diélectrique, de manière à ce que chaque couche métallique fonctionnelle soit disposée entre deux revêtements à base de matériaux diélectriques.

10. Matériau selon l'une quelconque des revendications précédentes **caractérisé en ce que** l'empilement de couches minces comprend au moins trois couches métalliques fonctionnelles à base d'argent, au moins quatre revêtements à base de matériaux diélectriques, chaque revêtement comportant au moins une couche diélectrique, de manière à ce que chaque couche métallique fonctionnelle soit disposée entre deux revêtements à base de matériaux diélectriques.

11. Matériau selon l'une quelconque des revendications précédentes, **caractérisé en ce que** l'empilement comprend :
- un revêtement à base de matériaux diélectriques situé en-dessous de la couche métallique fonctionnelle à base d'argent,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent,
- un revêtement protecteur.

12. Matériau selon l'une quelconque des revendications précédentes tel que le substrat transparent est :
- en verre silico-sodo-calcique ou
- en polyéthylène, en polyéthylène téréphtalate ou en polyéthylène naphtalate.

13. Procédé de préparation d'un matériau comprenant un substrat transparent en verre ou en polymère revêtu d'un empilement de couches minces déposées par pulvérisation cathodique éventuellement assistée par champ magnétique, le procédé comporte la séquence d'étapes suivantes :
- on dépose sur le substrat transparent au moins une couche fonctionnelle, puis
- on dépose un revêtement à base de matériaux diélectriques au-dessus de la couche fonctionnelle, puis
- on dépose une couche de protection inférieure présentant une épaisseur comprise entre 1 et 10 nm au-dessus du revêtement à base de matériaux diélectriques,
- on dépose une couche de protection centrale de carbone graphite au-dessus de la couche de protection inférieure,
- on dépose une couche de protection supérieure présentant une épaisseur comprise entre 1 et 10 nm au-dessus de la couche de protection centrale,
la couche de protection inférieure et la couche de protection supérieure sont choisies parmi une couche de titane, de zirconium, d'hafnium, de zinc et/ou d'étain, ce ou ces métaux étant sous forme métallique, oxydée ou nitrurée.

14. Procédé de préparation d'un matériau selon la revendication 13 **caractérisé en ce que** on fait subir un traitement thermique au substrat ainsi revêtu de manière à retirer de la surface dudit substrat la couche de protection centrale et la couche de protection supérieure.

## Patentansprüche

1. Material, umfassend ein transparentes Substrat aus Glas oder aus Polymer, das mit einem Stapel dünner Schichten beschichtet ist, der mindestens eine Funktionsschicht auf Basis von Silber umfasst, **dadurch gekennzeichnet, dass** der Stapel eine Schutzbeschichtung umfasst, die über mindestens einem Teil der Funktionsschicht abgeschieden ist, wobei die Schutzbeschichtung Folgendes umfasst:
- eine untere Schutzschicht, die eine Dicke im Bereich zwischen 1 und 10 nm vorweist,
- eine mittlere Schutzschicht auf Basis von Kohlenstoffgraphit, die sich über der unteren Schutzschicht befindet und
- eine obere Schutzschicht, die eine Dicke im Bereich zwischen 1 und 10 nm vorweist, die sich über der mittleren Schutzschicht befindet,
wobei die untere Schutzschicht und die obere Schutzschicht ausgewählt sind aus einer Schicht aus Titan, Zirkonium, Hafnium, Zink und/oder Zinn, wobei dieses oder diese Metalle in metallischer, oxidierter oder nitridierter Form vorliegen.

2. Material nach Anspruch 1, **dadurch gekennzeichnet, dass** die untere Schutzschicht und/oder die obere Schutzschicht eine Dicke aufweisen:
- kleiner oder gleich 5 nm und/oder
- größer oder gleich 2 nm.

3. Material nach einem der vorstehenden Ansprüche, **dadurch gekennzeichnet, dass** die untere Schutzschicht auf Titan und Zirkonium basiert, wobei diese zwei Metalle in metallischer, oxidierter oder nitridierter Form vorliegen.

4. Material nach Anspruch 3, **dadurch gekennzeichnet, dass** die untere Schutzschicht auf Basis von Titan und Zirkonium ein Gewichtsverhältnis von Titan zu Zirkonium Ti/Zr im Bereich zwischen 40 : 60 und 90 : 10 vorweist.

5. Material nach einem der vorstehenden Ansprüche, **dadurch gekennzeichnet, dass** die obere Schutzschicht auf Titanoxid basiert.

6. Material nach einem der vorstehenden Ansprüche, **dadurch gekennzeichnet, dass** die mittlere Schutzschicht auf Basis von Kohlenstoffgraphit Kohlenstoffatome enthält, die im Wesentlichen in einem sp2-Hybridisierungszustand vorliegen.

7. Material nach einem der vorstehenden Ansprüche, **dadurch gekennzeichnet, dass** die mittlere Schutzschicht eine Dicke aufweist:
- kleiner oder gleich 5 nm und/oder
- größer oder gleich 0,5 nm.

8. Material nach einem der vorstehenden Ansprüche, **dadurch gekennzeichnet, dass** der Stapel dünner Schichten mindestens eine metallische Funktionsschicht auf Basis von Silber, mindestens zwei Beschichtungen auf Basis dielektrischer Materialien umfasst, wobei jede Beschichtung mindestens eine dielektrische Schicht umfasst, sodass jede metallische Funktionsschicht zwischen zwei Beschichtungen auf Basis dielektrischer Materialien angeordnet ist.

9. Material nach einem der vorstehenden Ansprüche, **dadurch gekennzeichnet, dass** der Stapel dünner Schichten mindestens zwei metallische Funktionsschichten auf Basis von Silber, mindestens drei Beschichtungen auf Basis dielektrischer Materialien umfasst, wobei jede Beschichtung mindestens eine dielektrische Schicht umfasst, sodass jede metallische Funktionsschicht zwischen zwei Beschichtungen auf Basis dielektrischer Materialien angeordnet ist.

10. Material nach einem der vorstehenden Ansprüche, **dadurch gekennzeichnet, dass** der Stapel dünner Schichten mindestens drei metallische Funktionsschichten auf Basis von Silber, mindestens vier Beschichtungen auf Basis dielektrischer Materialien umfasst, wobei jede Beschichtung mindestens eine dielektrische Schicht umfasst, sodass jede metallische Funktionsschicht zwischen zwei Beschichtungen auf Basis dielektrischer Materialien angeordnet ist.

11. Material nach einem der vorstehenden Ansprüche, **dadurch gekennzeichnet, dass** der Stapel Folgendes umfasst:
- eine Beschichtung auf Basis dielektrischer Materialien, die sich unter der metallischen Funktionsschicht auf Basis von Silber befindet,
- gegebenenfalls eine Blockierschicht,
- eine metallische Funktionsschicht auf Basis von Silber,
- gegebenenfalls eine Blockierschicht,
- eine Beschichtung auf Basis dielektrischer Materialien, die sich über der metallischen Funktionsschicht auf Basis von Silber befindet,
- eine Schutzbeschichtung.

12. Material nach einem der vorstehenden Ansprüche, wobei das transparente Substrat besteht aus:
- Kalknatronsilikatglas oder
- Polyethylen, Polyethylenterephthalat oder Polyethylennaphthalat.

13. Verfahren zur Herstellung eines Materials, umfassend ein transparentes Substrat aus Glas oder aus Polymer, das mit einem Stapel dünner Schichten beschichtet ist, die durch Kathodenzerstäubung, gegebenenfalls durch ein Magnetfeld unterstützt, abgeschieden wurden, wobei das Verfahren die Abfolge von folgenden Schritten umfasst:
- Abscheiden mindestens einer Funktionsschicht auf das transparente Substrat, anschließend
- Abscheiden einer Beschichtung auf Basis dielektrischer Materialien über die Funktionsschicht, anschließend
- Abscheiden einer unteren Schutzschicht, die eine Dicke im Bereich zwischen 1 und 10 nm vorweist, über die Beschichtung auf Basis dielektrischer Materialien,
- Abscheiden einer mittleren Schutzschicht aus Kohlenstoffgraphit über die untere Schutzschicht,
- Abscheiden einer oberen Schutzschicht, die eine Dicke im Bereich zwischen 1 und 10 nm vorweist, über die mittlere Schutzschicht,
wobei die untere Schutzschicht und die obere Schutzschicht ausgewählt sind aus einer Schicht aus Titan, Zirkonium, Hafnium, Zink und/oder Zinn, wobei dieses oder diese Metalle in metallischer, oxidierter oder nitridierter Form vorliegen.

14. Verfahren zur Herstellung eines Materials nach Anspruch 13, **dadurch gekennzeichnet, dass** das so beschichtete Substrat einer Wärmebehandlung unterzogen wird, um die mittlere Schutzschicht und die obere Schutzschicht von der Oberfläche des Substrats zu entfernen.

## Claims

1. A material comprising a transparent substrate made of glass or polymer coated with a stack of thin layers comprising at least one silver-based functional layer, **characterized in that** the stack comprises a protective coating deposited on top of at least one portion of the functional layer, the protective coating comprising:
- a lower protective layer having a thickness of between 1 and 10 nm,
- a central protective layer based on carbon graphite located on top of the lower protective layer, and
- an upper protective layer having a thickness of between 1 and 10 nm located on top of the central protective layer,
the lower protective layer and the upper protective layer are chosen from a layer of titanium, of zirconium, of hafnium, of zinc and/or tin, this or these metal(s) being in the metal, oxidized or nitrided form.

2. The material as claimed in claim 1, **characterized in that** the lower protective layer and/or the upper protective layer have a thickness:
- of less than or equal to 5 nm, and/or
- of greater than or equal to 2 nm.

3. The material as claimed in any one of the preceding claims, **characterized in that** the lower protective layer is based on titanium and zirconium, these two metals being in the metal, oxidized or nitrided form.

4. The material as claimed in claim 3, **characterized in that** the lower protective layer based on titanium and zirconium has a weight ratio of titanium to zirconium Ti/Zr of between 40/60 and 90/10.

5. The material as claimed in any one of the preceding claims, **characterized in that** the upper protective layer is based on titanium oxide.

6. The material as claimed in any one of the preceding claims, **characterized in that** the central protective layer based on carbon graphite comprises carbon atoms essentially in an sp² hybridization state.

7. The material as claimed in any one of the preceding claims, **characterized in that** the central protective layer has a thickness:
- of less than or equal to 5 nm, and/or
- of greater than or equal to 0,5 nm.

8. The material as claimed in any one of the preceding claims, **characterized in that** the stack of thin layers comprises at least one silver-based functional metal layer, and at least two coatings based on dielectric materials, each coating comprising at least one dielectric layer, in such a way that each functional metal layer is placed between two coatings based on dielectric materials.

9. The material as claimed in any one of the preceding claims, **characterized in that** the stack of thin layers comprises at least two silver-based functional metal layers, and at least three coatings based on dielectric materials, each coating comprising at least one dielectric layer, in such a way that each functional metal layer is placed between two coatings based on dielectric materials.

10. The material as claimed in any one of the preceding claims, **characterized in that** the stack of thin layers comprises at least three silver-based functional metal layers, and at least four coatings based on dielectric materials, each coating comprising at least one dielectric layer, in such a way that each functional metal layer is placed between two coatings based on dielectric materials.

11. The material as claimed in any one of the preceding claims, **characterized in that** the stack comprises:
- a coating based on dielectric materials, placed below the silver-based functional metal layer,
- optionally a blocking layer,
- a silver-based functional metal layer,
- optionally a blocking layer,
- a coating based on dielectric materials, located on top of the silver-based functional metal layer,
- a protective layer.

12. The material as claimed in any one of the preceding claims, such that the transparent substrate is:
- made of soda-lime-silica glass, or
- made of polyethylene, of polyethylene terephthalate or of polyethylene naphthalate.

13. A process for preparing a material comprising a transparent substrate made of glass or polymer coated with a stack of thin layers deposited by cathode sputtering, optionally magnetic field-enhanced cathode sputtering, the process comprising the sequence of the following steps:
- at least one functional layer is deposited on the transparent substrate, then
- a coating based on dielectric materials is deposited on top of the functional layer, then
- a lower protective layer having a thickness of between 1 and 10 nm is deposited on top of the coating based on dielectric materials,
- a central protective layer of carbon graphite is deposited on top of the lower protective layer,
- an upper protective layer having a thickness of between 1 and 10 nm is deposited on top of the central protective layer,
the lower protective layer and the upper protective layer are chosen from a layer of titanium, of zirconium, of hafnium, of zinc and/or tin, this or these metal(s) being in the metal, oxidized or nitrided form.

14. The process for preparing a material as claimed in claim 13, **characterized in that** the substrate thus coated is made to undergo a heat treatment in such a way as to remove, from the surface of said substrate, the central protective layer and the upper protective layer.
